# EUROPEAN PATENT APPLICATION

(11) **EP 4 289 992 A1**
(43) Date of publication of application: **13.12.2023**
(21) Application number: 21924502.4
(22) Date of filing: 08.02.2021
(51) Int. Cl.: C25D 1/04

(54) **ATMOSPHERIC AUTONOMOUS INSTALLATION FOR PRODUCING HYDROGEN**

(71) Applicant: Suarez Izquierdo, Juan Carmelo, 35004 Las Palmas de Gran Canaria (Las Palmas) (ES)
(72) Inventor: Suarez Izquierdo, Juan Carmelo, 35004 Las Palmas de Gran Canaria (Las Palmas) (ES)
(74) Representative: Capitán García, Maria Nuria
(86) International application number: PCT/ES2021/070087
(87) International publication number: WO 2022/167706

(57) **Abstract**

Autonomous atmospheric installation for producing hydrogen comprising: a cooling system; at least one water condensation cell in the form of a plate where the evaporator is arranged; the water condensation cell is inserted into a container that can collect the condensed water; a duct runs from the lower part of the container for conveying the condensed water, passes through water treatment means from which another duct runs with the treated water and returns to the container; another duct runs, downstream of the water treatment means, for conveying the treated water, suitable for human consumption, out of the installation; another duct reaches an electrolyser device; another duct runs from the electrolyser device for conveying hydrogen.

## Description

### TECHNICAL FIELD OF THE INVENTION

The present invention is encompassed in the field of installations for the production of hydrogen and, specifically, those that use ambient humidity.

### BACKGROUND OF THE INVENTION

Typical hydrogen production installations have a water supply line, as raw material for hydrogen production, which may be scarce in certain environments, such as desert climates.

In other installations, ambient humidity, thus called atmospheric installations, is used as the main source of water supply. As in patent US8844299 that explains an installation for the generation of drinking water from atmospheric humidity, said installation being of a certain complexity and estimating that it would hardly provide a usable amount of water on an industrial scale.

Patent EP992889 is also known, which explains a thermodynamic panel in parallel to a solar collector, said panel helps the collector thermally, but does not make use of the condensed water.

### DESCRIPTION OF THE INVENTION

The present invention is defined and characterised by the independent claim, while the dependent claims describe other characteristics thereof.

The object of the invention is an autonomous atmospheric installation for producing hydrogen. The technical problem to solve is to configure said installation, in its components and the relationship between them, so that it does not need an external water supply to produce hydrogen.

In view of the above, the present invention relates to an autonomous atmospheric installation for producing hydrogen. "Autonomous" means that it does not need an external supply of water. "Atmospheric" means that it uses ambient humidity solely as a water source.

The installation is characterised in that it comprises the combination of the following elements: a cooling system, which comprises a compressor, an evaporator and a condenser, as in the usual cooling systems, it also includes the necessary valves; at least one water condensation cell in the form of a plate where the evaporator of the cooling system is arranged. In this description, it has been decided to separate the plate from the evaporator in order to provide clarity and continuity to the elements of the cooling system, so as not to otherwise separate the evaporator from the rest of the elements of the cooling system, even when said evaporator can be an embossment on the plate or a duct; however, it can be seen in what follows in this description, that the plate and the evaporator are linked to achieve the desired water condensation effect.

In the installation, a first duct runs from the compressor for conveying a coolant to the evaporator; a second duct runs from the evaporator to the condenser; a third duct runs from the condenser back to the compressor; the water condensation cell is inserted into a container that can collect the condensed water, condensation that takes place on the plate when it cools the surrounding air to dew point; a fourth duct runs from the lower part of the container for conveying the condensed water, it passes through water treatment means that comprise a filtering membrane, so generally referred to, and can be a battery of membranes or any known configuration of membranes; a fifth duct runs from the water treatment means with the treated water and returns to the container through a seventh duct, feeding water back to the container; a sixth duct connected to the fifth duct downstream of the water treatment means for conveying the treated water, suitable for human consumption, out of the installation; an eighth duct runs from the fifth duct to an electrolyser device; a tenth duct runs from the electrolyser device for conveying hydrogen.

In this way, an autonomous installation is achieved, since it does not use water from outside, but even returns its own water within the installation, using only condensed ambient or atmospheric water.

An added advantage is that in addition to obtaining water for electrolysis, water for human consumption is also obtained, so that when all the water produced is not decomposed in the electrolyser device it can be used for human consumption, which is doubly advantageous in desert climates or situations with a shortage of drinking water.

Other advantages of the installation related to characteristics of the dependent claims are cited in the detailed explanation below.

### BRIEF DESCRIPTION OF THE DRAWINGS

The present specification is complemented by a set of figures which illustrate a preferred embodiment, and which in no way limit the invention.
Figure 1 represents a diagram of the installation with several water condensation cells arranged in parallel.
Figure 2 represents a plan view of a corner of a water condensation cell.
Figure 3 represents an elevation view of two water condensation cells in vertical stacking.
Figure 4 represents the installation of Figure 1 with added elements, such as a heat sink.

### DETAILED DESCRIPTION OF THE INVENTION

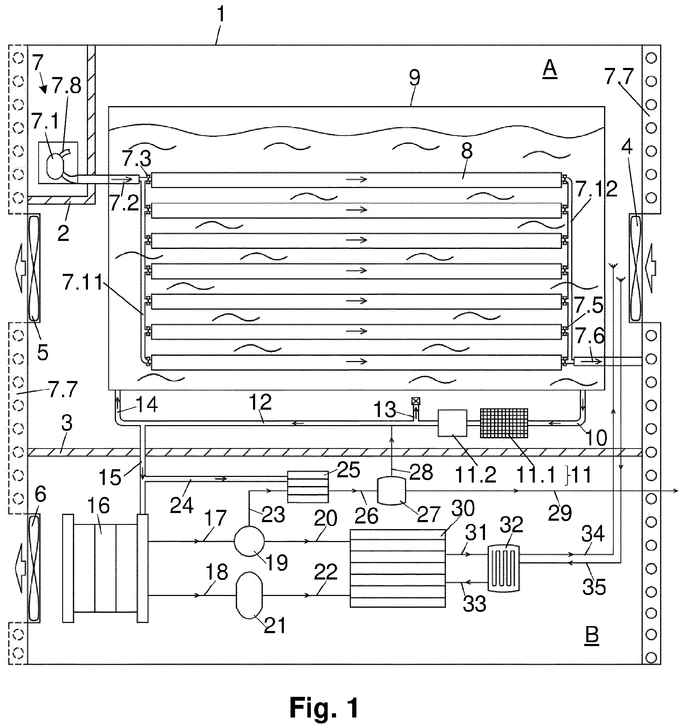

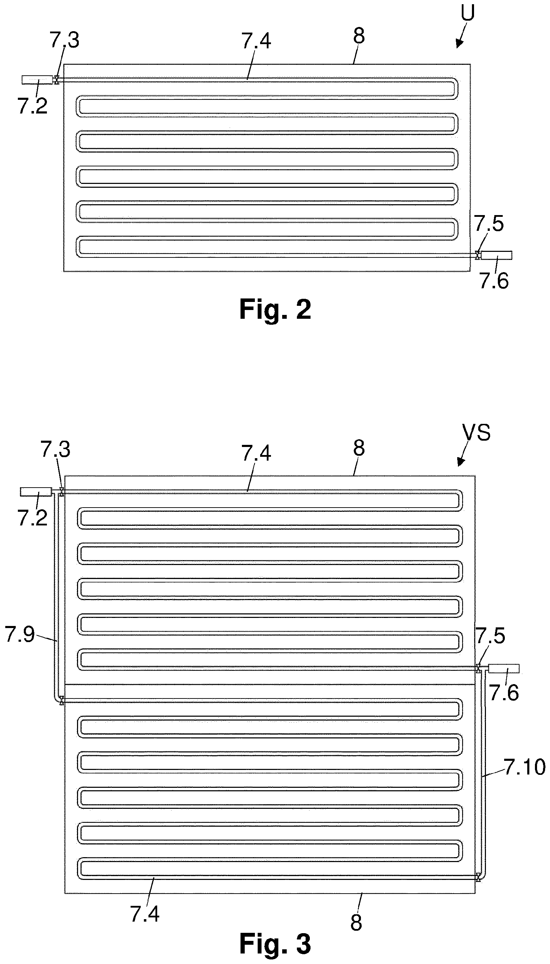

Figure 1 shows an autonomous atmospheric installation for producing hydrogen that comprises: a cooling system (7), which comprises a compressor (7.1), an evaporator (7.4) and a condenser (7.7), it also includes the corresponding valves, not represented in the figures; at least one water condensation cell (8) in the form of a plate, where the evaporator (7.4) of the cooling system (7) is arranged. Figure 1 shows several water condensation cells (8) in parallel and in plan views, specifically seven in number, although the minimum would be one water condensation cell (8) and there is no limit to the maximum number. Figure 2 shows a water condensation cell (8) with the evaporator (7.4) as a succession of parallel straight sections along its longest side, connected by curves, in the form of a coil, to cover the largest surface area of the water condensation cell (8).

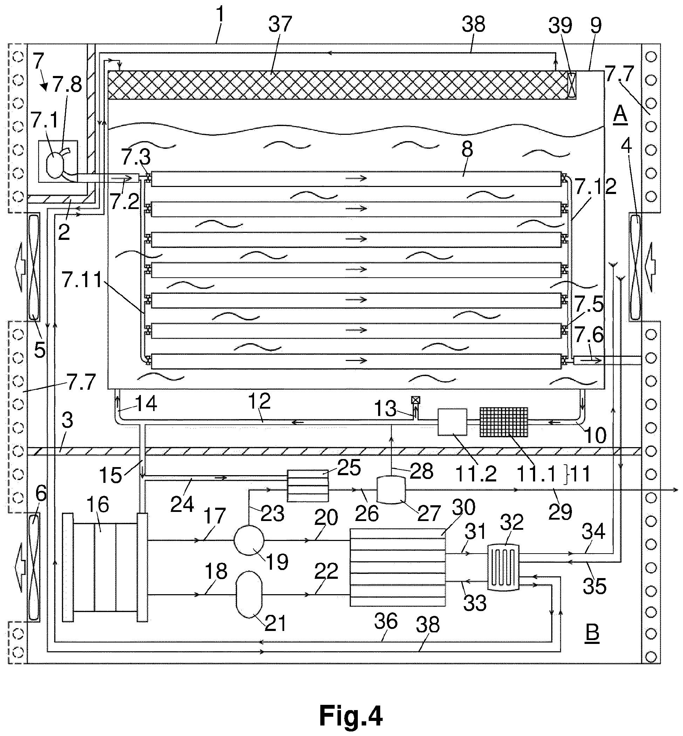

As shown in Figure 1, a first duct (7.2) runs from the compressor (7.1) for conveying a coolant to the evaporator (7.4); a second duct (7.6) runs from the evaporator (7.4) to the condenser (7.7), represented in Figures 1 and 4 as a coil in cross section, although it could have any other configuration; a third duct (7.8), partially represented in Figures 1 and 4, runs from the condenser (7.7) back to the compressor (7.1); the water condensation cell (8) is inserted into a container (9) that can collect the condensed water, shown graphically with wavy lines; a fourth duct (10) runs from the lower part of the container (9) for conveying the condensed water, it passes through water treatment means (11) that comprise a filtering membrane (11.1); a fifth duct (12) runs from the water treatment means (11) with the treated water and returns to the container (9) through a seventh duct (14); a sixth duct (13) connected to the fifth duct (12) downstream of the water treatment means (11) for conveying treated water, suitable for human consumption, out of the installation; an eighth duct (15) runs from the fifth duct (12) to an electrolyser device (16); a tenth duct (18) runs from the electrolyser device (16) for conveying hydrogen. These cited components are the minimum to complete the invention in its most general configuration. Figure 1 shows other components that complete the installation and are explained below.

One option to make use of the hydrogen and oxygen generated in the production of electrical energy is to include a ninth duct (17) that runs from the electrolyser device (16) for conveying oxygen to an oxygen tank (19) from which an eleventh duct (20) runs; the tenth duct (18) reaches a hydrogen tank (21) from which a twelfth duct (22) runs; the eleventh duct (20) with oxygen and the twelfth duct (22) with hydrogen reach a fuel cell (30) for producing electricity.

Another option, regarding the arrangement of the water condensation cells (8), is that two or more water condensation cells (8) can be arranged one on top of the other, in vertical stacking (VS) the upper side of one corresponding to the lower side of the contiguous or adjacent one, Figure 3, an inlet connector (7.9) connects the water condensation cell inlets (8) and an outlet connector (7.10) connects the water condensation cell outlets (8). The vertically stacked water condensation cells (8) favour a more uniform air flow avoiding freezing problems; in this way, although we have two inlets and outlets as a normal configuration, we could work with only one, using the corresponding valve as mentioned here below, and have the second one for more extreme climates where a second inlet and outlet may be necessary.

In the option of Figure 1 in which two or more water condensation cells (8) are arranged in parallel, a common inlet manifold (7.11) connects the inlets to each of the water condensation cells (8), a common outlet manifold (7.12) connects the outlets of each of the water condensation cells (8); when they are unitary (U) water condensation cells (8), Figure 2, they are arranged one parallel to the other; when they are vertical stacks (VS) they are arranged one parallel to the other. That is, both the water condensation cells (8) one by one, as well as when they form groups of batteries, can be placed in parallel. In this way it is possible to modulate the power of the equipment and the final production of water with a minimum space, the greater the number of panels, the greater the production of water.

One option is that a first valve (7.3) be included in the evaporator (7.4) at the inlet of each water condensation cell (8) and a second valve (7.5) at the outlet thereof, Figures 1 to 4. Especially advantageous when there are several water condensation cells (8), either in parallel as in Figure 1, Figure 2 can also be an elevation view of a parallel arrangement where the first water condensation cell (8) can be seen, or in vertical stacking as in Figure 3, with the advantage for the replacement or repair of a water condensation cell (8) since it allows it to be isolated from the rest, without having to stop the entire installation. Preferably the first (7.3) and second (7.5) valves are so-called quick valves that prevent gas leaks and ingress of humidity when they are disconnected, in this way it is not necessary to stop or purge the entire installation.

One option for each water condensation cell (8) is for it to have a nanoceramic and hydrophobic surface coating. This facilitates the sliding of the water over the surface of the water condensation cell (8) and provides it with sufficient mechanical resistance during its service life. Additionally, it is advantageous that the same coating has certain flexibility, to withstand stress without breaking, and non-toxic, according to current regulations.

By way of illustration, each water condensation cell (8) can have a surface area of about 2m ² and a width of 3-5mm. These dimensions being proven to be advantageous, although they could be any other.

Another option that can be seen in Figure 1 is that a ninth duct (17) runs from the electrolyser device (16) for conveying oxygen to an oxygen tank (19); a thirteenth duct (23) runs from the oxygen tank (19); a fourteenth duct (24) runs from the eighth duct (15) for conveying treated water; the thirteenth duct (23) and the fourteenth duct (24) reach a hydrogen peroxide generator (25) for producing hydrogen peroxide.

Another option, Figure 1, is that the water treatment means (11) include an ultraviolet disinfection device (11.2), thus increasing the disinfection of the water. This alone can suffice, or the ultraviolet disinfection device (11.2) can be eliminated or used in conjunction with the following option: a fifteenth duct (26) runs from the hydrogen peroxide generator (25) to a hydrogen peroxide tank (27) from which a sixteenth duct (28) runs to be connected to the fifth duct (12) downstream of the water treatment means (11). In this way, hydrogen peroxide is introduced into the treated water to increase its disinfection.

A variant of the commented option is that a seventeenth duct (29) runs from the hydrogen peroxide tank (27), Figure 1, out of the installation, to use the hydrogen peroxide outside the installation for sanitary use, disinfection of utensils, etc.

Another option is that an eighteenth duct (31) runs from the fuel cell (30) with a first heat exchange liquid to an exchanger (32) from which a nineteenth duct (33) runs back to the fuel cell (30), to expel the heat generated in the fuel cell (30), Figure 1. As an addition to this, a twentieth duct (34) runs from the exchanger (32) with a second heat exchange liquid and whose open end opposite the exchanger (32) is in contact with the air, and a twenty-first duct (35) returns to the exchanger (32) with the second heat exchange liquid and whose open end opposite the exchanger (32) is also in contact with the air in order to expel heat generated in the fuel cell (30), Figure 1.

Another option, Figure 4, is that a heat sink (37) is arranged inside the container (9) and in its upper part opposite the water condensation part; a twenty-second duct (36) runs from the exchanger (32) with a third heat exchange liquid and reaches the heat sink (37), a twenty-third duct (38) runs from the heat sink (37) with the third heat exchange liquid and returns to the exchanger (32), in order to covey the heat generated in the fuel cell (30) to the container (9) to heat the air entering the installation in areas where the outside temperature is extremely low and can cause freezing in the water condensation cell (8). Additionally, a fourth fan (39) can be arranged in contact with the heat sink (37), Figure 4.

Advantageously, as shown in Figure 1, the cooling system (7), the water condensation cell (8), the container (9), the water treatment means (11), the electrolyser device (16), the first (7.2), second (7.6), third (7.8), fourth (10), fifth (12), sixth (13), seventh (14) and eighth (15) ducts are arranged inside a container (9); a first insulator (2) surrounds the cooling system (7), creating a first cavity (A); a second insulator (3) separates the container (9), fourth (10), fifth (12), sixth (13) and seventh (14) ducts from the electrolyser device (16), creating a second cavity (B), the eighth duct (15) passes through the second insulator (3) passing from the first (A) to the second cavity (B); a first fan (4) is arranged in correspondence with a first side of the container (9) facing the evaporator (7.4) on the coolant-outlet-side thereof; a second fan (5) in correspondence with a second side of the container (9) facing the evaporator (7.4) on the coolant-intlet-side thereof, so that an air current is created contrary to the direction followed by the coolant inside the evaporator (7.4); the condenser (7.7) is arranged in the container (9), outside it and next to the first fan (4), in a solid line in Figures 1 and 4, or next to the second fan (5), in a dashed line in Figures 1 and 4, in the configuration shown it extends along the entire side of the container (9) to make use of its entire length. Additionally, a third fan (6) can be arranged in correspondence with the electrolyser device (16), to ventilate the gases, oxygen and hydrogen. With this we have the minimum configuration framed within a container (9) .

Similarly, for the components that complete the installation, Figures 1 and 4, the oxygen tank (19), the hydrogen tank (21), the fuel cell (30), the hydrogen peroxide generator (25), the hydrogen peroxide tank (27), the exchanger (32), the ninth (17), eleventh (20), twelfth (22), thirteenth (23), fourteenth (24), fifteenth (26), sixteenth (28), seventeenth (29), eighteenth (31) and nineteenth (33) ducts are arranged on the same side inside the container (1) with respect to the second insulator (3); a portion of the twentieth (34) and twenty-first (35) duct is arranged on the same side inside the container (1) with respect to the second insulator (3), passing through it so that its open end faces the first fan (4). As an addition to this, a portion of the twenty-second (36) and twenty-third (38) duct is arranged on the same side inside the container (1) with respect to the second insulator (3), passing through it so that it reaches the heat sink (37), Figure 4.

The first (4), second (5), third (6) and fourth (39) fans can be of any type, although good operation of the magnetic type has been verified.

Another advantageous option is that a spherical polycarbonate-type absorbent material is arranged in the lower part of the container (9), to improve water retention.

## Claims

1. Autonomous atmospheric installation for producing hydrogen **characterised in that** it comprises: a cooling system (7), which comprises a compressor (7.1), an evaporator (7.4) and a condenser (7.7); at least one water condensation cell (8) in the form of a plate where the evaporator (7.4) of the cooling system (7) is arranged; a first duct (7.2) runs from the compressor (7.1) for conveying a coolant to the evaporator (7.4); a second duct (7.6) runs from the evaporator (7.4) to the condenser (7.7); a third duct (7.8) runs from the condenser (7.7) back to the compressor (7.1); the water condensation cell (8) is inserted into a container (9) that can collect the condensed water; a fourth duct (10) runs from the lower part of the container (9) for conveying the condensed water, it passes through water treatment means (11) that comprise a filtering membrane (11.1); a fifth duct (12) runs from the water treatment means (11) with the treated water and returns to the container (9) through a seventh duct (14); a sixth duct (13) connected to the fifth duct (12) downstream of the water treatment means (11) for conveying treated water, suitable for human consumption, out of the installation; an eighth duct (15) runs from the fifth duct (12) to an electrolyser device (16); a tenth duct (18) runs from the electrolyser device (16) for conveying hydrogen.

2. Installation according to claim 1 wherein a ninth duct (17) runs from the electrolyser device (16) for conveying oxygen to an oxygen tank (19) from which an eleventh duct (20) runs; the tenth duct (18) reaches a hydrogen tank (21) from which a twelfth duct (22) runs; the eleventh duct (20) with oxygen and the twelfth duct (22) with hydrogen reach a fuel cell (30) for producing electricity.

3. Installation according to claim 1 wherein two or more water condensation cells (8) are arranged one on top of the other, in vertical stacking (VS), the upper side of one corresponding to the lower side of the adjacent one; an inlet connector (7.9) connects the water condensation cell (8) inlets and an outlet connector (7.10) connects the water condensation cell (8) outlets.

4. Installation according to claim 1 wherein two or more water condensation cells (8) are arranged in parallel; a common inlet manifold (7.11) connects the inlets to each of the water condensation cells (8); a common outlet manifold (7.12) connects the outlets of each of the water condensation cells (8); when they are unitary (U) water condensation cells (8), they are arranged one parallel to the other; when they are vertical stacks (VS) they are arranged one parallel to the other.

5. Installation according to any of claims 3 or 4, wherein a first valve (7.3) is included in the evaporator (7.4) at the inlet of each water condensation cell (8) and a second valve (7.5) at the outlet thereof.

6. Installation according to claim 1, wherein each water condensation cell (8) has a nanoceramic and hydrophobic surface coating.

7. Installation according to claim 1, wherein a ninth duct (17) runs from the electrolyser device (16) for conveying oxygen to an oxygen tank (19); a thirteenth duct (23) runs from the oxygen tank (19); a fourteenth duct (24) runs from the eighth duct (15) for conveying treated water; the thirteenth duct (23) and the fourteenth duct (24) reach a hydrogen peroxide generator (25) for producing hydrogen peroxide.

8. Installation according to claim 1, wherein the water treatment means (11) include an ultraviolet disinfection device (11.2).

9. Installation according to claim 7 wherein a fifteenth duct (26) runs from the hydrogen peroxide generator (25) to a hydrogen peroxide tank (27) from which a sixteenth duct (28) runs to be connected to the fifth duct (12) downstream of the water treatment means (11) or a seventeenth duct (29) runs out of the installation.

10. Installation according to claim 2 wherein an eighteenth duct (31) runs from the fuel cell (30) with a first heat exchange liquid to an exchanger (32) from which a nineteenth duct (33) runs back to the fuel cell (30).

11. Installation according to claim 10 wherein a twentieth duct (34) runs from the exchanger (32) with a second heat exchange liquid and whose open end opposite the exchanger (32) is in contact with the air, and a twenty-first duct (35) returns to the exchanger (32) with the second heat exchange liquid and whose open end opposite the exchanger (32) is in contact with the air.

12. Installation according to claim 10 wherein a heat sink (37) is arranged inside the container (9) and at its upper part opposite the water condensation part; a twenty-second duct (36) runs from the exchanger (32) with a third heat exchange liquid and reaches the heat sink (37), a twenty-third duct (38) runs from the heat sink (37) with the third heat exchange liquid and returns to the exchanger (32).

13. Installation according to claim 12 wherein a fourth fan (39) is arranged in contact with the heat sink (37).

14. Installation according to claim 1, wherein the cooling system (7), the water condensation cell (8), the container (9), the water treatment means (11), the electrolyser device (16), the first (7.2), second (7.6), third (7.8), fourth (10), fifth (12), sixth (13), seventh (14) and eighth (15) ducts are arranged inside a container (9); a first insulator (2) surrounds the cooling system (7); a second insulator (3) separates the container (9), fourth (10), fifth (12), sixth (13) and seventh (14) ducts from the electrolyser device (16), the eighth duct (15) passes through the second insulator (3); a first fan (4) is arranged in correspondence with a first side of the container (9) facing the evaporator (7.4) on the coolant-outlet-side thereof; a second fan (5) is arranged in correspondence with a second side of the container (9) facing the evaporator (7.4) on the coolant-inlet-side thereof, so that an air current is created contrary to the direction followed by the coolant inside the evaporator (7.4); the condenser (7.7) is arranged in the container (9), outside it and next to the first fan (4) or next to the second fan (5).

15. Installation according to claim 14 wherein a third fan (6) is arranged in correspondence with the electrolyser device (16).

16. Installation according to any of claims 14 or 15 and according to claims 2, 7, 9 to 11, wherein the oxygen tank (19), the hydrogen tank (21), the fuel cell (30), the hydrogen peroxide generator (25), the hydrogen peroxide tank (27), the exchanger (32), the ninth (17), eleventh (20), twelfth (22), thirteenth (23), fourteenth (24), fifteenth (26), sixteenth (28), seventeenth (29), eighteenth (31) and nineteenth (33) ducts are arranged on the same side inside the container (1) with respect to the second insulator (3); a portion of the twentieth (34) and twenty-first (35) duct is arranged on the same side inside the container (1) with respect to the second insulator (3), passing through it so that its open end faces the first fan (4).

17. Installation according to claims 12 and 16 wherein a portion of the twenty-second (36) and twenty-third (38) duct is arranged on the same side inside the container (1) with respect to the second insulator (3), passing through it so that it reaches the heat sink (37).
